# EUROPÄISCHE PATENTSCHRIFT

(11) **EP 0 781 733 B1**
(45) Veröffentlichungstag und Bekanntmachung des Hinweises auf die Patenterteilung: **27.01.1999**
(21) Anmeldenummer: 96115519.9
(22) Anmeldetag: 27.09.1996
(51) Int. Cl.: C04B 28/12, C04B 16/08, C04B 14/18

(54) **Leichtmauermörtel und Verfahren zu seiner Herstellung**
Lightweight mortar and method of producing the same
Mortier léger et procédé pour sa fabrication

(30) Priorität: 28.12.1995 DE 19548952
(43) Veröffentlichungstag der Anmeldung: 02.07.1997
(73) Patentinhaber: Koch, Hans-Georg, 37688 Beverungen (DE); Koch, Christoph, 37688 Beverungen (DE); Koch, Martin, 37688 Beverungen (DE)
(72) Erfinder: Koch, Hans-Georg,, 37688 Beverungen (DE)
(74) Vertreter: KEIL & SCHAAFHAUSEN Patentanwälte

(56) Entgegenhaltungen:
- DE-A- 2 625 675
- DE-A- 2 938 338

## Beschreibung

Die Erfindung betrifft einen Leichtmauermörtel und ein Verfahren zu seiner Herstellung.

Unter Mörtel wird ein Baustoff verstanden, der in der Regel aus Bindemitteln, Sand und Wasser hergestellt wird, und dem zur Beeinflussung bestimmter Eigenschaften Mörtelzusätze zugegeben werden. Zusammensetzung und Eigenschaften der Mörtel können je nach Verwendungszweck sehr verschieden sein. So werden nach ihrer Anwendung bspw. Mauermörtel, Putzmörtel, Estrichmörtel, Fugenmörtel und dgl. unterschieden. Mauermörtel wird mit Mauersteinen zur Herstellung von Mauerwerk verwendet. Der Mörtel muß zwischen den Steinen die Hohlräume ausfüllen und eine kraftschlüssige Verbindung zur Übertragung von Druck, Schub- und Zugkräften herstellen. Er hat daher Aufgaben der Tragfähigkeit und der Dichtigkeit zu übernehmen und muß über eine entsprechende Beständigkeit verfügen. Mauermörtel werden zur besseren Unterscheidbarkeit in DIN 1053 auf der Basis ihrer Zusammensetzung und Druckfestigkeit in Mörtelgruppen eingeteilt. Insbesondere im Hausbau wird zur Energieeinsparung im Fugenbereich des Mauerwerks eine erhöhte Wärmedämmung angestrebt. Deshalb werden außer anderen Maßnahmen, wie bspw. der Unterbrechung von Fugen durch besondere Wandbausteinausbildung, für die Fugen zunehmend auch Mörtel mit geringerer Rohdichte und erhöhter Wärmedämmung (sogenannte Leichtmörtel) vorgesehen. Leichtmörtel werden mit künstlichen oder natürlichen mineralischen Leichtzuschlägen, wie Blähton, Blähschiefer, Hüttenbims und dgl., oder künstlichen organischen Leichtzuschlägen mit porigem Gefüge, wie bspw. Schaumkunststoff aus Polystyrol hergestellt. Bisher mußte Leichtmörtel eine Rohdichte von mehr als 1.0 kg/dm³ aufweisen, um einen ausreichenden Wärmeschutz zu gewährleisten. Dieser Leichtmörtel wird in der einschlägigen DIN 1053 Teil 1 als LM 36 bezeichnet. Nach Änderung der Wärmeschutzverordnung wurde auch die DIN 1053 Teil 1 überarbeitet und für den sogenannten LM 21 werden bei gleichen Festigkeitswerten Rohdichten von weniger als 0.7 kg/dm³ gefordert, die mit den herkömmlicherweise verwendeten Mörtelbestandteilen nicht erreichbar sind. Bei Einhalten der geforderten Rohdichte gelten die Anforderungen an die Wärmeleitfähigkeit ohne Nachweis als erfüllt, so daß auf aufwendige Versuche und Nachweisprotokolle verzichtet werden kann. Die Rohdichte ist im Vergleich zur Wärmeleitfähigkeit sehr einfach zu bestimmen.

Aus der DE-U 92 01 498.4 ist ein Leichtzuschlagstoff für Putz auf der Basis von expandiertem Polystyrol bekannt, der durch Zerkleinern der Polystyrolpartikel vor der Verwendung als Leichtzuschlagstoff geschaffen wird. Ein Putz mit einem solchen Leichzuschlagstoff weist bspw. 16% Zement, 2% Kalkhydrat (jeweils bezogen auf die Masse des Leichtzuschlagstoffs), einen Kalkbruchsand von 0.1 bis 1.6 mm Körnung sowie Flugasche und Sand auf. Abgesehen davon, daß zu den mit einem solchen Putz erreichbaren Rohdichtewerten und damit Wärmedämmung keine Angaben gemacht sind, werden an Putz insbesondere hinsichtlich der Festigkeit völlig andere Anforderungen gestellt als an Hauswände zusammenhaltenden Mauermörtel. Putz und Mauermörtel sind daher nicht ohne weiteres vergleichbar.

Die DE-OS 23 51 469 beschreibt ein Verfahren zum Herstellen von Leichtbeton, bei den als Leichtzuschlagstoffe anorganische Stoffe wie Blähtonsand einer Körnung von 0 bis 4 mm und Blähton der Körnung 4 bis 20 mm sowie Styropor-Partikel der Körnung von 0,5 bis 2 mm verwendet werden. Bei einer bevorzugten Leichtbetonzusammensetzung sind Styropor-Partikel mit einem Volumenanteil von 25 % zu Blähtonsand und Blähton sowie eine ausreichende Menge Zement und Wasser vorgesehen. Ein gesonderter Betonverflüssiger wird nicht zugegeben. Damit soll bei einer Festigkeitsklasse von LBn 100 für Stahlleichtbeton und LBn 50 für unbewehrten Leichtbeton eine Rohdichte von 0.9 bis 1.0 kg/dm³ erreichbar sein, die jedoch noch erheblich über den um Leichtmörtel geforderten Werten liegt.

Aus der DE-C 29 38 338 ist ein Leichtbeton mit Zuschlagstoff Perlite oder Bims- und Schaumpolystyrolperlen bekannt. Ein solcher Leichtbeton kann auch einen Betonverflüssiger, wie ein Kondensationsprodukt aus Melamin und Formaldehyd aufweisen. Die für Leichtmörtel geforderten Wärmedämmeigenschaften lassen sich mit den in dieser Druckschrift aufgezeigten Mischungszusammensetzungen aber nicht erreichen.

Schließlich ist aus der DE-OS 37 20 286 ein Leichtbeton bekannt, der als Zementbims einen Polystyrolschaumbeton aufweist sowie anorganische Stoffe wie Bims, Blähton oder Schlacke und ein Fließmitteladditiv. Die Verwendung eines solchen Leichtbetons, bspw. als Baustein, Bautafel, Zwischenwandplatte, zur Herstellung von Gesimsrohlingen oder als Schüttgut zur Aufbringung auf Geschoßdecken, ist jedoch mit der eines Mauermörtels nicht vergleichbar.

Aufgabe der Erfindung ist es daher, einen Leichtmauermörtel zu schaffen, der bei ausgezeichneter Festigkeit hervorragende Wärmedämmeigenschaften aufweist.

Diese Aufgabe wird mit der Erfindung im wesentlichen durch einen Leichtmauermörtel mit den Merkmalen des Anspruchs 1 gelöst. Durch die anstelle der mineralischen Leichtzuschläge verwendeten Materialien ausgesprochen geringer Dichte kann der Mörtel leichter gemacht werden. Überraschenderweise wurde herausgefunden, daß durch Zugabe von bisher nicht bei Mörtel eingesetztem Betonverflüssiger dennoch eine ausreichende Festigkeit erreicht werden kann. Der Verflüssiger ermöglicht einen geringeren Wasseranteil und erhöht die Festigkeit. Es ist gelungen, mit dem erfindungsgemäßen Leichtmörtel eine Rohdichte von weniger als 0,7 kg/dm³ zu erreichen.

Bei einer bevorzugten Ausgestaltung der Erfindung liegt der auf das Trockengewicht des Mörtels (ohne Wasser) bezogene Anteil des Styropors bei 0,1 bis 2 Gewichtsprozent vorzugsweise bei ca. 0,2 bis 1 %, da bei höheren Anteilen eine ausreichende Festigkeit nicht mehr gewährleistet werden kann. Als besonders vorteilhaft hat sich dabei relativ grobförmiges Styropor erwiesen, dessen Korngröße vorzugsweise bis zu 6 mm (Durchmesser) beträgt.

Um die Herstellungskosten des Leichtmörtels zu senken, ist erfindungsgemäß vorgesehen, die Styroporanteile des Mörtels aus Abfallprodukten von Verpackungsmaterial oder Baustoffabfällen, wie Poresta, zu gewinnen. Da keine großflächigen Styroporplatten benötigt werden, ist ein erneutes gesteuertes Aufschäumen nicht erforderlich, sondern es genügt, Abfallstyropor feinzumahlen und anschließend in der gewünschten Menge in den Mörtel einzuarbeiten.

Der Trockengewichtsanteil der Perlite, bei denen es sich um glasig erstarrte, wasserhaltige Vulkangesteine mit feinkugeliger, schaliger Absonderung handelt, beträgt ca. 3 bis 15 Gewichtsprozent, vorzugsweise ca. 5 bis 10 %. Die bspw. aus einem Lavasteinbruch gewonnenen Perlite werden gemahlen und in einen Ofen eingeblasen, in dem sie auf ca. 1000 °C erhitzt werden. Die erhaltenen Perlitpartikel, deren Korngröße erfindungsgemäß bei bis zu 2 mm, vorzugsweise bis zu 1,5 mm Durchmesser liegt, haben dann eine Dichte von etwa 120 kg/m³.

Zusätzlich oder alternativ können auch grobkörnigere Perlite mit Durchmessern bis zu 6 mm verwendet werden, wobei dann auch der Anteil der Perlite erhöht werden kann.

Die Menge des Verflüssigers liegt erfindungsgemäß bei ca. 0,1 bis 0,5 Gewichtsprozent, vorzugsweise ca. 0,2 bis 0,3 Gewichtsprozent. Bei Zugabe von ca. 2 kg Verflüssigers zu 1 m³ Trockenmörtel läßt sich die erforderliche Wassermenge pro m³ Mörtel um ca. 120 Liter verringern und die Festigkeit um ca. 2 N/mm² erhöhen. Je höher die Wasserzugabe ist, desto geringer ist die erreichbare Festigkeit.

Zusätzlich können dem Mörtel Füllstoffe, wie Kohlenflugasche oder dgl., bspw. mit einem Gewichtsanteil von 10 bis 20% zugegeben werden. Die Füllstoffe werden benötigt, um Feinsträume zu schließen und dadurch eine höhere Festigkeit zu erreichen.

Schließlich werden dem Mörtel bei einer Ausgestaltung der Erfindung Luftporenbildner und/oder Verzögerer beigegeben, deren Gewichtsanteile etwa in dem Rahmen derjenigen des Verflüssigers liegen. Durch den Verzögerer wird ein zu schnelles Aushärten des Mörtels verhindert und damit die zur Verfügung stehende Verarbeitungszeit verlängert. Der Verzögerer wird nur dann benötigt, wenn der Mörtel verarbeitungsfertig, d.h. bereits mit Wasser vermischt, zur Baustelle gelangt. Bei Trockenmörtel, der erst auf der Baustelle mit Anmachwasser versetzt wird, wird dagegen im allgemeinen kein Verzögerer eingesetzt. Die Luftporenbildner werden eingesetzt, um Hohlräume zu schaffen oder zu erhalten und dadurch das Gewicht zu vermindern.

In Versuchen wurde festgestellt, daß zufriedenstellende Mörteleigenschaften mit einem Leichtmörtel erreicht werden, der folgende Bestandteile aufweist: 0,2 bis 2 Gewichtsprozent Styropor, 4 bis 18 Gewichtsprozent Perlite, 35 bis 80 Gewichtsprozent Zement, 10 bis 20 Gewichtsprozent Kalk und 0,15 bis 0,5 Gewichtsprozent Verflüssiger (bezogen auf das Trockengewicht).

Folgende Zusammensetzungen haben sich als besonders vorteilhaft herausgestellt: 0,2 bis 1 % Styropor, 7 bis 10 % Perlite, 40 bis 75 % Zement, 14 bis 18 % Kalk und ca. 0,2 bis 0,3 % Verflüssiger (bezogen auf das Trockengewicht).

Ein besonders zufriedenstellender Leichtmörtel wies folgende Zusammensetzung auf: ca. 0,6 % Styropor, ca. 10 % Perlite, ca. 75 % Zement, ca. 14 % Kalk, je ca. 0,3 % Verflüssiger, Luftporenbildner und Verzögerer (bezogen auf das Trockengewicht). Ein Mörtel mit einer derartigen Zusammensetzung weist eine Rohdichte von weniger als 0,7 kg/dm³ auf.

Ein Nachteil der Leichtzuschlagstoffe besteht darin, daß sich Poresta aber auch die anorganischen Perlite nur schwer in die übrigen Mörtelbestandteile einmischen lassen. Selbst das Einblasen der Perlite in einen Mischer oder in Vorratssilos ist problematisch. Das Einblasen ist nur sehr langsam und mit wenig Luft möglich, daß bei einem zu schnellen Einblasen mit zuviel Luft das Material zu fein, ja sogar zu Staub wird. Die Erhöhung der Feinanteile bewirkt zwar eine Erhöhung der Festigkeit bis auf 30 /mm², eine akzeptable Rohdiichte kann aber nicht mehr erreicht werden.

Erfindungsgemäß wird daher vorgeschlagen, die Mörtelbestandteile in einen ruhenden Mischer einzufüllen und erst dann den Mischvorgang, insbesondere das Rühren, zu beginnen.

Am besten eignet sich hierzu ein Trogmischer, der die Mischung langsam beginnt und nach etwa 30 Sekunden stufenweise schneller wird. Hierdurch wird gewährleistet, daß sich das Material gut vermischt, was die Qualität und die Festigkeit fördert.

Die Mischungszusammensetzung kann durch Wiegen bestimmt werden. Lediglich die Perlite werden in Anpassung an die üblichen Abpackeinheiten vorzugsweise über das Volumen und nicht das Gewicht zugegeben. So werden bspw. 1 m³ Mörtel 1,5 m³ Perlite und 0,3 m³ Styropor beigemischt.

Weiterbildungen, Vorteile und Anwendungsmöglichkeiten der Erfindung ergeben sich auch aus der nachfolgenden Beschreibung von Ausführungsbeispielen. Dabei bilden alle beschriebenen Merkmale den Gegenstand der Erfindung, unabhängig von ihrer Zusammenfassung in den Ansprüchen oder deren Rückbeziehung.

Es wurden verschiedene Leichtmörtel mit unterschiedlicher Zusammensetzung nach dem oben beschriebenen Verfahren hergestellt und auf ihre Rohdichte und Fertigkeitswerte überprüft.

### Beispiel A

Ein erster erfindungsgemäßer Leichtmörtel zur Verwendung als Mauermörtel enthält bei einem Volumen von ca. 1 m³ etwa 4 kg grobes Styropor einer Größe von 0 bis 6 mm, 70 kg Perlite einer Größe von 0 bis 1,5 mm, 520 kg Zement (hier: Portlandzement der Festigkeitsklasse PZ 45) und 100 kg Baukalk, wie er unter der Bezeichnung "Ilsefit" bspw. von dem Zementwerk Anneliese in Enningerloh und Paderborn vertrieben wird, als Bindemittel, und jeweils ca. 2 kg BV Verflüssiger, Luftporenbildner und VZ-Verzögerer, zusätzlich wurden ca. 440 Liter Wasser zugegeben. Bei einem Trockengewicht von ca. 700 kg ergibt sich dabei ein Gewichtsanteil des Styropors von 0,57 %, der Perlite von 10 %, des Zements von 74,3 %, des Kalkes von 14,3 %, des Verflüssigers, des Verzögerers und des Luftporenbildners von je ca.0,29 %.

Es wurden Versuche durchgeführt, um die Rohdichte und die Festigkeitswerte dieses Leichtmörtels zu überprüfen. Hierzu wurden 3 Prismenprobekörper einer Größe von 0,04 x 0,04 x 0,16 m und 3 Würfel (0,15 x 0,15 x 0,15 m) eines Volumens von 3,38 dm³ überprüft. Es ergaben sich folgende Werte:

### Prismen (Frischmörtel nach 36 Stunden Trocknungszeit bei ca. 110°C)

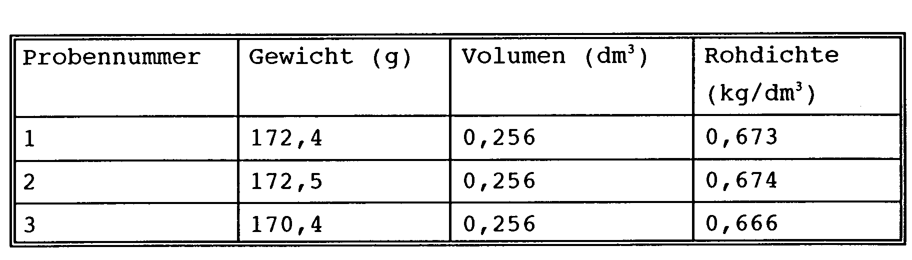

### Würfel nicht getrocknet (Frischmörtel)

In eine Würfelform wurde frischer Naßmörtel eingefüllt und verdichtet. Anschließend wurde die Druckfestigkeitsprüfung an einer Presse durchgeführt, wobei die Festigkeit ermittelt wird, bei der der Würfel zerplatzt. Die Festigkeitsmessungen wurden nach verschiedenen Tagen vorgenommen, um die Entwicklung der Festigkeiten zu überprüfen.

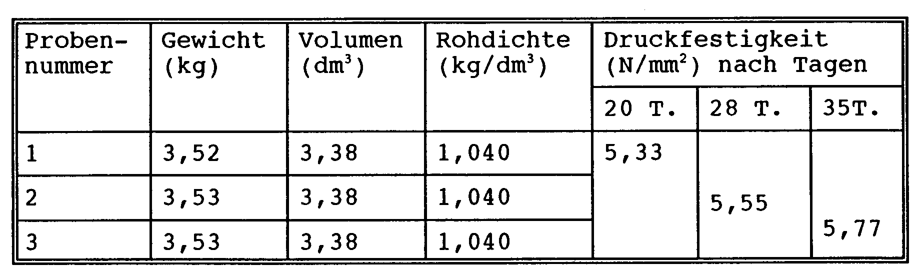

### Beispiel B

Ein weiterer untersuchter Leichtmörtel enthält bei 1m³ Trockenvolumen etwa 4 kg grobes Styropor einer Größe von 0 bis 6 mm, 70 kg Perlite einer Größe von 0 bis 1,5 mm, 520 kg Zement (PZ 45) und 120 kg Baukalk als Bindemittel, jeweils 2 kg Verflüssiger, Luftporenbildner und Verzögerer. Außerdem werden ca. 360 Liter Wasser zugegeben. Bei einem Gesamttrockengewicht von ca. 720 kg ergibt sich dabei ein Gewichtsanteil des Styropors von 0,56 %, der Perlite von 9,7 %, des Zements von 72,2 %, des Kalkes von 16,7 %, des Verflüssigers, des Verzögerers und des Luftporenbildners von je ca. 0,28 %.

Bei Versuchen zur Bestimmung der Rohdichte und Festigkeitswerte (analog Beispiel A) ergaben sich folgende Werte:

### Prismen (Frischmörtel nach 36 Stunden Trocknungszeit bei ca. 110°C)

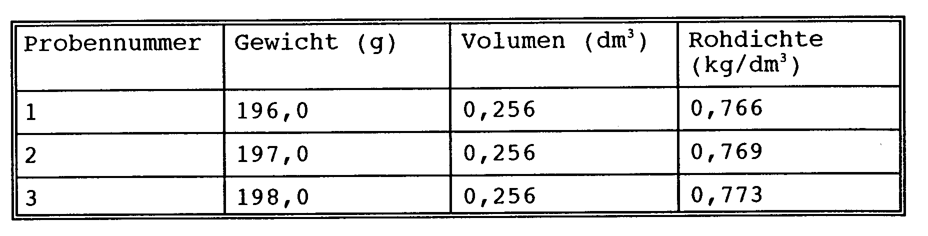

### Würfel nicht getrocknet (Frischmörtel)

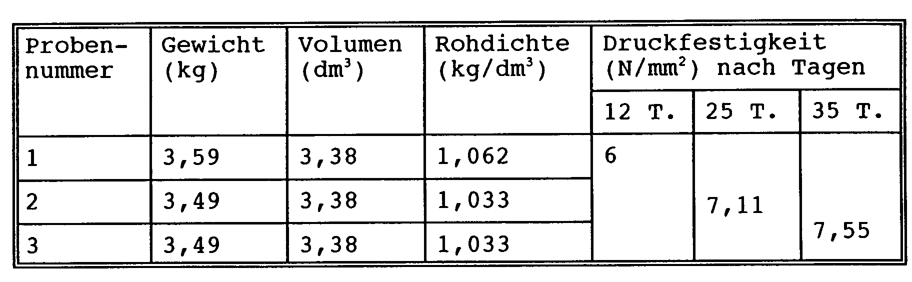

### Beispiel C

Ein dritter untersuchter Leichtmörtel enthält bei ca. 1 m³ Trockenvolumen etwa 3,5 kg grobes Styropor einer Größe von 0 bis 6 mm, 80 kg Perlite einer Größe von 0 bis 1,5 mm, 500 kg Zement (PZ 45) und 120 kg Baukalk als Bindemittel, ca. 2 kg Luftporenbildner und jeweils 1,5 kg Verzögerer und Verflüssiger, 120 kg Füller (bspw. Kohlenflugasche). Zusätzlich wurden ca. 436 Liter Wasser zugegeben. Bei einem Gesamttrockengewicht von ca. 828,5 kg ergibt sich dabei ein Gewichtsanteil des Styropors von 0,42 %, der Perlite von 9,7 %, des Zements von 60,4 %, des Kalkes von 14,5 %, des Füllers von 14,5 %, des Luftporenbildners von ca. 0,24 %, des Verflüssigers und des Verzögerers von je ca. 0,18 %.

Bei Versuchen zur Bestimmung der Rohdichte und Festigkeitswerte (analog Beispiel A) ergaben sich folgende Werte:

### Prismen (Frischmörtel nach 36 Stunden Trocknungszeit bei ca. 110°C)

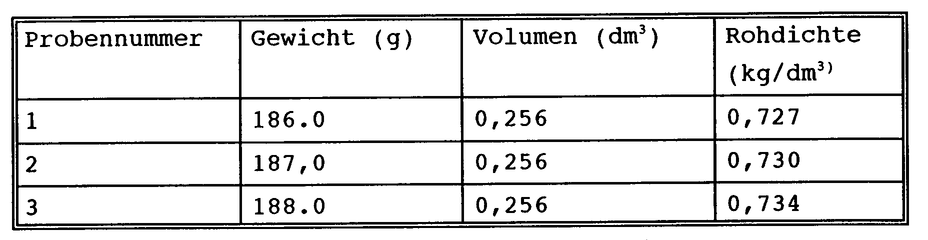

### Würfel nicht getrocknet (Frischmörtel)

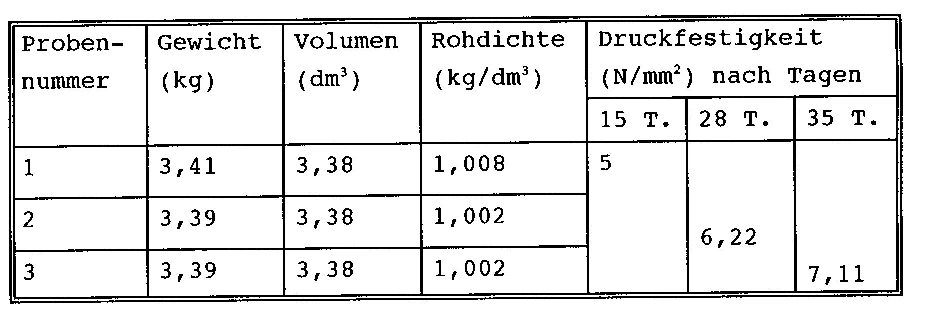

### Beispiel D

Ein vierter untersuchter Leichtmörtel enthält bei ca. 1m³ Trockenvolumen etwa 6 kg grobes Styropor einer Größe von 0 bis 6 mm, 55 kg Perlite einer Größe von 0 bis 2 mm, 500 kg Zement (PZ 45) und 120 kg Baukalk als Bindemittel, und jeweils ca. 2 kg Luftporenbildner, Verzögerer und Verflüssiger. Zusätzlich wurden ca. 296 Liter Wasser zugegeben. Bei einem Gesamttrockengewicht von ca. 687 kg ergibt sich dabei ein Gewichtsanteil des Styropors von 0,87 %, der Perlite von 8 %, des Zements von 72,8 %, des Kalkes von 17,5 %, des Verflüssigers, des Verzögerers und des Luftporenbildners von je ca. 0,3 %.

Bei Versuchen zur Bestimmung der Rohdichte und Festigkeitswerte (analog Beispiel A) ergaben sich folgende Werte:

### Prismen (Frischmörtel nach 36 Stunden Trocknungszeit bei ca. 110°C)

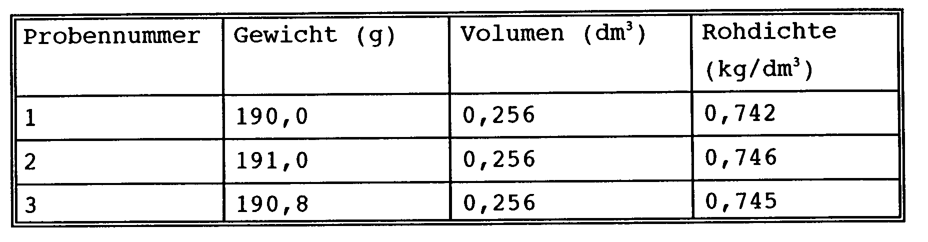

### Würfel nicht getrocknet (Frischmörtel)

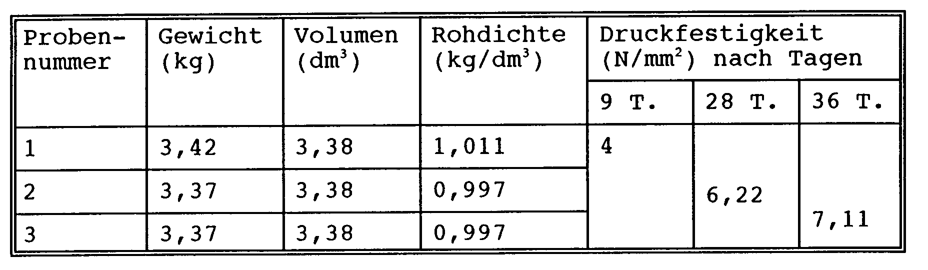

Bei den Beispielen wurden die Werte der Einzelbestandteile variiert, um den Einfluß auf die Rohdichte und die Festigkeit des erhaltenen Leichtmörtels zu überprüfen. Aus den erhaltenen Werten ergibt sich, daß insbesondere der Leichtmörtel gemäß Beispiel A die geforderte Rohdichte von weniger als 0,7 kg/dm³ erreicht, wobei er dennoch eine ausreichende Festigkeit von mehr als 5 N/mm² aufweist. Die Leichtmörtel gemäß den Beispielen B bis D wiesen bei höheren Festigkeitswerten auch eine höhere Rohdichte von größer 0.7 kg/dm³ auf.

Man erkennt, daß die Verringerung des Wasseranteils von Beispiel A zu Beispiel B eine Erhöhung der Rohdichte mit sich bringt, ebenso wie die Verringerung des Verflüssigeranteils beim Beispiel C.

Beim Beispiel D wurde der Anteil des Styropors erhöht, während derjenige der Perlite etwas erniedrigt wurde. Auch die Wassermenge wurde drastisch reduziert. Auch hierbei ergab sich eine höhere Rohdichte von etwa 0,74 kg/dm³.

Im Beispiel C wurden zusätzlich 120 kg Füller, bspw. Kohlenflugasche, zugegeben.

Um den Einfluß von Verflüssiger auf die Versuchswerte zu überprüfen, wurden ferner Versuche ohne Zugabe von Verflüssiger durchgeführt.

### Vergleichsbeispiel E

Ein Kubikmeter Trockenmörtel wies folgende Zusammensetzung auf: 74 kg Perlite (0-2mm Durchmesser), 40 kg Perlite (0-6mm Durchmesser), 320 kg Zement (PZ 45), 160 kg Kalk, 120 kg Füller (Kohlenflugasche), 2 kg Luftporenbildner und 1 kg Verzögerer. Damit ergeben sich folgende Trockengewichtsanteile: ca. 10,3 % Perlite (0-2), ca. 5,6% Perlite (0-6), ca. 45% Zement, ca. 22,3% Kalk, ca. 16,7% Füller, ca. 0,28% Luftporenbildner und ca. 0,14% Verzögerer.

An drei Probeprismen (analog Beispiel A) ergaben sich Gewichte von 166,5, 167 und 166 g und damit Rohdichten von 0,650, 0,652 bzw. 0,648 kg/dm³, während drei Probewürfel (analog Beispiel A) Festigkeiten nach 16 Tagen von 3,4 N/mm² und nach 28 Tagen von 4,3 N/mm² aufwiesen.

### Vergleichsbeispiel F

Bei diesem Versuch wurde statt der groben Perlite grobes Styropor (0-6 mm Durchmesser) verwendet.

Ein Kubikmeter Trockenmörtel wies folgende Zusammensetzung auf: 6 kg Styropor grob (0-6 mm Durchmesser), 54 kg Perlite (0-1,5 mm Durchmesser), 350 kg Zement (PZ 45), 180 kg Kalk, 110 kg Füller (Kohlenflugasche), 2 kg Luftporenbildner und 1 kg Verzögerer. Damit ergeben sich folgende Trockengewichtsanteile: ca. 0,85 % Styropor, ca. 7,7% Perlite, ca. 49,8% Zement, ca. 25,6% Kalk, ca. 15,6% Füller, ca. 0,28% Luftporenbildner und ca. 0,14% Verzögerer.

An drei Probeprismen (analog Beispiel A) ergaben sich Gewichte von 168, 171 und 172 g und damit Rohdichten von 0,656, 0,667 bzw. 0,671 kg/dm³, während drei Probewürfel (analog Beispiel A) Festigkeiten nach 20 Tagen von 4 N/mm² und nach 28 Tagen von 4,3 N/mm² aufwiesen.

Man erkennt, daß ohne Verflüssiger zwar hervorragende Rohdichtewerte erzielt werden, die Druckfestigkeit aber vieles zu wünschen übrig läßt. Ein optimales Ergebnis mit guten Rohdichte- und Festigkeitswerten läßt sich daher nur durch die erfindungsgemäße Zugabe von Styropor und/oder Perliten und Verflüssiger erreichen.

Die Zugabe des verwendeten Verzögerers (VZ), wie er bspw. von der BPS Baustoffprüfgesellschaft mbH, Salzkotten lieferbar ist, verhindert ein zu schnelles Aushärten des Mörtels. Im allgemeinen werden durch Zugabe von etwa 1 kg Verzögerer pro m³ Volumen des Leichtmörtels Verzögerungszeiten von etwa 7 bis 8 Stunden erreicht, so daß ca. 1 Tag mit dem Mörtel gearbeitet werden kann, ohne noch Wasser zusetzen zu müssen.

Die Verarbeitung des erfindungsgemäßen Mörtels und seine Geschmeidigkeit haben sich als ausgesprochen gut erwiesen.

Das verwendete Styropor wurde aus Abfallprodukten von Verpackungsmaterial und Baustoffabfällen bspw. Poresta, hergestellt, so daß bei einer Senkung der Herstellungskosten des Leichtmörtels gleichzeitig ein effizienter Weg zur Entsorgung, Aufbereitung und Wiederverwertung dieser Verpackungsabfälle ermöglicht wird. Zweckmäßigerweise wird hierzu das Styropormaterial feingemahlen und in Silos eingeblasen. Anschließend wird es in Behältern ausgewogen und in der gewünschten Menge dem Mörtel beigemischt.

Mit der Erfindung wird somit ein Leichtmörtel geschaffen, der bei kostengünstiger Herstellung hervorragende Wärmedämmeigenschaften und zufriedenstellende Festigkeitswerte aufweist.

## Patentansprüche

1. Leichtmauermörtel mit >
- 0,1 bis 5 Gew.% Styropor
- 3 bis 18 Gew.% Perlite
- 35 bis 80 Gew.% Zement
- 10 bis 20 Gew.% Kalk
- 0,1 bis 0,5 Gew.% Verflüssiger (bezogen auf das Trockengewicht)

2. Leichtmauermörtel nach Anspruch 1, **dadurch gekennzeichnet**, daß der Trockengewichtsanteil des Styropors ca. 0,1 bis 2 %, vorzugsweise 0,2 bis 1 % beträgt.

3. Leichtmauermörtel nach einem der Ansprüche 1 oder 3, **dadurch gekennzeichnet**, daß das Styropor relativ grobkörnig ist und vorzugsweise eine Korngröße von bis zu 6 mm aufweist.

4. Leichtmauermörtel nach einem der Ansprüche 1 bis 3, **dadurch gekennzeichnet**, daß die Styroporanteile aus Abfallprodukten von Verpackungsmaterial oder Baustoffabfällen, wie Poresta, hergestellt sind.

5. Leichtmauermörtel nach einem der Ansprüche 1 bis 4, **dadurch gekennzeichnet**, daß der Trockengewichtsanteil der perlite ca. 3 bis 15%, vorzugsweise ca. 5 bis 10% beträgt.

6. Leichtmauermörtel nach einem der Ansprüche 1 bis 5, **dadurch gekennzeichnet**, daß die Perlite eine Größe von bis zu 6 mm haben.

7. Leichtmauermörtel nach Anspruch 6, **dadurch gekenn zeichnet**, die Perlite eine Größe von bis zu 2 mm, vorzugsweise bis zu 1,5 mm haben.

8. Leichtmauermörtel nach einem der Ansprüche 1 bis 7, **dadurch gekennzeichnet**, daß der Anteil des Verflüssigers ca. 0,1 bis 0,5 Gewichtsprozent, vorzugsweise ca. 0,2 bis 0,3 Gewichtsprozent beträgt.

9. Leichtmauermörtel nach einem der Ansprüche 1 bis 8, **dadurch gekennzeichnet**, daß er pro Kubikmeter Trockenvolumen ca. 2 kg Verflüssiger aufweist.

10. Leichtmauermörtel nach einem der Ansprüche 1 bis 9, mit einem Anteil von ca. 10% bis 20% Füllstoffen, insbesondere Kohlenflugasche oder dgl.

11. Leichtmauermörtel nach einem der Ansprüche 1 bis 10, **gekennzeichnet durch** einen Luftporenbildner, vorzugsweise in einem Anteil von ca. 0,2 bis 0,3 Gewichtsprozent.

12. Leichtmauermörtel nach einem der Ansprüche 1 bis 11, **gekennzeichnet durch** einen Verzögerer (VZ), vorzugsweise in einem Anteil von ca. 0,2 bis 0,3 Gewichtsprozent.

13. Leichtmauermörtel nach einem der Ansprüche 1 bis 12 mit ca. 0,2 bis 2 Gewichtsprozent Styropor, ca. 4 bis 18 Gewichtsprozent Perliten, ca. 35 bis 80 Gewichtsprozent Zement, ca. 10 bis 20 Gewichtsprozent Kalk und ca. 0,15 bis 0,5 Gewichtsprozent Verflüssiger (bezogen auf das Trockengewicht).

14. Leichtmauermörtel nach Anspruch 13, mit ca. 0,2 bis 1 Gewichtprozent Styropor, ca. 7 bis 10 Gewichtsprozent Perliten, ca. 40 bis 80 Gewichtsprozent Zement, ca. 14 bis 18 Gewichtsprozent Kalk und ca. 0,2 bis 0,3 Gewichtsprozent Verflüssiger.

15. Leichtmauermörtel nach Anspruch 14 mit
ca. 0,6 Gew.% Styropor,
ca. 10 Gew.% Perliten,
ca. 75 Gew.% Zement,
ca. 14 Gew.% Kalk,
ca. 0,3 Gew.% Luftkporenbildner,
ca. 0,3 Gew.% Verflüssiger (BV) und
ca. 0,3 Gew.% Verzögerer (VZ)

16. Verfahren zur Herstellung eines Leichtmauermörtels nach einem der Ansprüche 1 bis 15, **dadurch gekennzeichnet**, daß die Mörtelbestandteile in einen ruhenden Mischer eingefüllt werden, daß der Mischer nach dem Einfüllen langsam mit dem Mischen, insbesondere Rühren beginnt, und daß die Mischgeschwindigkeit stufenweise gesteigert wird.

17. Verfahren nach Anspruch 16, **dadurch gekennzeichnet**, daß die Steigerung der Mischgeschwindigkeit erst ca. 30 Sekunden nach dem Beginn des Mischvorgangs erfolgt.

18. Verfahren nach Anspruch 16 oder 17, **dadurch gekennzeichnet**, daß als Mischer ein Trogmischer verwendet wird.

19. Verfahren nach einem der Ansprüche 16 bis 18, **dadurch gekennzeichnet**, daß die Zugabe der Perlite in Volumenanteilen und nicht in Gewichtsanteilen erfolgt.

## Claims

1. Lightweight masonry mortar comprising
- 0.1 to 5% by weight Styropor
- 3 to 18 % by weight perlite
- 35 to 80 % by weight cement
- 10 to 20% by weight lime
- 0.1 to 0.5 % by weight fluidifiers (in relation to the dry weight).

2. Lightweight masonry mortar according to claim 1, characterised in that the dry weight content of the Styropor is approximately 0.1 to 2 %, preferably 0.2 to 1 %.

3. Lightweight masonry mortar according to one of claims 1 or 2, characterised in that the Styropor is relatively coarse-grained and preferably has a grain size of up to 6 mm.

4. Lightweight masonry mortar according to one of claims 1 to 3, characterised in that the Styropor content is produced from waste products from packaging material or building material waste, such as Poresta.

5. Lightweight masonry mortar according to one of claims 1 to 4, characterised in that the dry weight content of the perlite is approximately 3 to 15 %, preferably approximately 5 to 10 %.

6. Lightweight masonry mortar according to one of claims 1 to 5, characterised in that the perlite has a grain size of up to 6 mm.

7. Lightweight masonry mortar according to claim 6, characterised in that the perlite has a grain size of up to 2 mm, preferably up to 1.5 mm.

8. Lightweight masonry mortar according to one of claims 1 to 7, characterised in that the fluidifier content is approximately 0.1 to 0.5 per cent by weight, preferably approximately 0.2 to 0.3 per cent by weight.

9. Lightweight masonry mortar according to one of claims 1 to 8, characterised in that it comprises approximately 2 kg fluidifiers per cubic metre dry volume.

10. Lightweight masonry mortar according to one of claims 1 to 9, containing approximately 10 % to 20 % fillers, in particular coal flue ash or the like.

11. Lightweight masonry mortar according to one of claims 1 to 10, characterised by an air-entraining agent, preferably in a content of approximately 0.2 to 0.3 per cent by weight.

12. Lightweight masonry mortar according to one of claims 1 to 11, characterised by a retarder (VZ), preferably in a content of approximately 0.2 to 0.3 per cent by weight.

13. Lightweight masonry mortar according to one of claims 1 to 12, containing approximately 0.2 to 2 per cent by weight Styropor, approximately 4 to 18 per cent by weight perlite, approximately 35 to 80 per cent by weight cement, approximately 10 to 20 per cent by weight lime and approximately 0.15 to 0.5 per cent by weight fluidifier (in relation to the dry weight).

14. Lightweight masonry mortar according to claim 13, containing approximately 0.2 to 1 per cent by weight Styropor, approximately 7 to 10 per cent by weight perlite, approximately 40 to 80 per cent by weight cement, approximately 14 to 18 per cent by weight lime and approximately 0.2 to 0.3 per cent by weight fluidifier.

15. Lightweight masonry mortar according to claim 14, comprising
- approximately 0.6 % by weight Styropor,
- approximately 10 % by weight perlite,
- approximately 75 % by weight cement,
- approximately 14 % by weight lime,
- approximately 0.3 % by weight air-entraining agent,
- approximately 0.3 % by weight fluidifier (BV) and
- approximately 0.3 % by weight retarder (VZ).

16. Method of producing a lightweight masonry mortar according to one of claims 1 to 15, characterised in that the mortar constituents are poured into a static mixer, that the mixer, after charging, slowly begins the mixing operation, in particular agitation, and that the rate of mixing is increased in stages.

17. Method according to claim 16, characterised in that the rate of mixing is not increased until approximately 30 seconds after the beginning of the mixing operation.

18. Method according to claim 16 or claim 17, characterised in that a trough-type mixer is used.

19. Method according to one of claims 16 to 18, characterised in that the perlite is added in parts by volume and not in parts by weight.

## Revendications

1. Mortier léger comprenant
- 0,1 à 5 % en poids de polystyrène expansé
- 3 à 18 % en poids de perlite
- 35 à 80 % en poids de ciment
- 10 à 20 % en poids de chaux
- 0,1 à 0,5 % en poids de fluidifiant (rapporté au poids à sec).

2. Mortier léger selon la revendication 1, caractérisé par le fait que la proportion en poids à sec du polystyrène expansé est d'environ 0,1 à 2 %, de préférence de 0,2 à 1 %.

3. Mortier léger selon une des revendications 1 ou 2, caractérisé par le fait que le polystyrène expansé est présent on grains relativement gros et de préférence présente une dimension de grains allant jusqu'à 6 mm.

4. Mortier léger selon une des revendications 1 à 3, caractérisé par le fait que le polystyrène expansé est produit à partir de matériau d'emballage ou de déchets de matériau de construction tel que de la mousse dure de polystyrène (de type Poresta ®).

5. Mortier léger selon une des revendications 1 à 4, caractérisé par le fait que la proportion en poids à sec de la perlite est d'environ 3 à 15 %, de préférence d'environ 5 à 10 %.

6. Mortier léger selon une des revendications 1 à 5, caractérisé par le lait que la perlite présente une dimension de grains allant jusqu'à 6 mm.

7. Mortier léger selon la revendication 6, caractérisé par le fait que la perlite présente une dimension de grains allant jusqu'à 2 mm, de préférence jusqu'à 1,5 mm.

8. Mortier léger selon une des revendications 1 à 7, caractérisé par le fait que la proportion de fluidifiant est d'environ 0,1 à 0,5 % en poids, de préférence de 0,2 à 0,3 % en poids.

9. Mortier léger selon une des revendications 1 à 8, caractérisé par le fait qu'il présente environ 2 kg de fluidifiant par mètre cube de volume à sec.

10. Mortier léger selon une des revendications 1 à 9, comprenant une teneur en charges d'environ 10 % à 20 %, notamment de cendres volatiles de charbon.

11. Mortier léger selon une des revendications 1 à 10, caractérisé par un agent de formation de pores, de préférence en une proportion d'environ 0,2 à 0,3 % en poids.

12. Mortier léger selon une des revendications 1 à 11, caractérisé par un agent retardateur (VZ), de préférence en une proportion d'environ 0,2 à 0,3 % en poids.

13. Mortier léger selon une des revendications 1 à 12, comprenant environ 0,2 à 2 pourcents en poids de polystyrène expansé, environ 4 à 18 pourcents en poids de perlite, environ 35 à 80 pourcents en poids de ciment, environ 10 à 20 pourcents en poids de chaux et environ 0,15 à 0,5 pourcents en poids de fluidifiant (rapporté au poids à sec).

14. Mortier léger selon la revendication 13, comprenant environ 0,2 à 1 pourcent en poids de polystyrène expansé, environ 7 à 10 pourcents en poids de perlite, environ 40 à 80 pourcents en poids de ciment, environ 14 à 18 pourcents en poids de chaux et environ 0,2 à 0,3 pourcents en poids de fluidifiant.

15. Mortier léger selon la revendication 14 comprenant
- 0,6 % en poids de polystyrène expansé
- 10 % en poids de perlite
- 75 % en poids de ciment
- 14 % en poids de chaux
- 0,3 % en poids d'agent de formation de pores
- 0,3 % en poids de fluidifiant (BV)
- 0,3 % en poids d'agent retardateur (VZ).

16. Procédé de fabrication d'un mortier léger selon une des revendications 1 à 15, caractérisé par le fait que l'on introduit les composants du mortier dans un malaxeur à l'arrêt, par le fait qu'après chargement du malaxeur, on commence le malaxage, notamment l'agitation, à faible vitesse et par le lait que l'on augmente la vitesse de malaxage par paliers.

17. Procédé selon la revendication 16, caractérisé par le lait que l'augmentation de la vitesse de malaxage n'intervient qu'environ 30 minutes après le début du malaxage.

18. Procédé selon la revendication 16 ou 17, caractérisé par le fait que l'on utilise un mélangeur à bac comme malaxeur.

19. Procédé selon une des revendications 16 à 18, caractérisé par le fait que l'on incorpore la perlite par fractions de volume et non pas par fractions de poids.
